(19) Europäisches Patentamt

European Patent Office

Office européen des brevets

(11) **EP 1 652 819 A1**

(12) **EUROPEAN PATENT APPLICATION**
published in accordance with Art. 158(3) EPC

(43) Date of publication:
**03.05.2006 Bulletin 2006/18**

(51) Int Cl.:
*C01G 53/00* (1968.09)    *H01M 4/02* (1974.07)
*H01M 4/58* (1974.07)    *H01M 10/40* (1974.07)

(21) Application number: **04747702.1**

(22) Date of filing: **12.07.2004**

(86) International application number:
**PCT/JP2004/010238**

(87) International publication number:
**WO 2005/007577 (27.01.2005 Gazette 2005/04)**

(84) Designated Contracting States:
**DE FR GB**

(30) Priority: **18.07.2003 JP 2003199205**
**25.08.2003 JP 2003208657**

(71) Applicant: **TOSOH CORPORATION**
**Shunan-shi**
**Yamaguchi-ken 746-8501 (JP)**

(72) Inventors:
• **Fujii, Yasuhiro**
  **Shunan-shi,**
  **Yamaguchi 745-0851 (JP)**
• **Suzuki, Naoto**
  **Shunan-shi,**
  **Yamaguchi 746-0024 (JP)**
• **Shoji, Takayuki**
  **Shunan-shi,**
  **Yamaguchi 746-0011 (JP)**
• **Kuniyoshi, Minoru**
  **Yamaguchi-shi,**
  **Yamaguchi 753-0212 (JP)**
• **Iwata, Eiichi**
  **Shunan-shi,**
  **Yamaguchi 746-0011 (JP)**

(74) Representative: **Pautex Schneider, Nicole**
**Véronique et al**
**Novagraaf International SA**
**25, Avenue du Pailly**
**1220 Les Avanchets - Geneva (CH)**

(54) **LITHIUM-NICKEL-MANGANESE COMPOSITE OXIDE, PROCESS FOR PRODUCING THE SAME AND USE THEREOF**

(57)    A subject for the invention relates to providing a positive active material for lithium ion secondary batteries which attains a high discharge capacity and is excellent in rate characteristics and cycle characteristics.

A feature of the invention resides in that a lithium-nickel-manganese composite oxide which has a composition represented by $Li_xNi_yMn_zO_2$ wherein x is $1+1/9\pm(1+1/9)/10$, y is $4/9\pm(4/9)/10$, and z is $4/9\pm(4/9)/10$, in particular, represented by the general formula $Li[Ni_{0.5-0.5X}Mn_{0.5-0.5X}Li_X]O_2$ wherein X satisfies $0.05\leq X\leq0.11$, and has a crystal structure belonging to the monoclinic system and having a space group of C12/m1 (No. 12) is used as a positive-electrode material. The lithium-nickel-manganese composite oxide preferably is one in which in X-ray powder diffractometry using a Cu-$K_\alpha$ ray, the peak intensity ratio $I_{(002)}/I_{(13-3)}$ between the (002) plane and the (13-3) plane in terms of Miller indexes hkl on the assumption of belonging to C12/m1 (No. 12) of the monoclinic system is 1.35 or higher.

*FIG. 1*

## Description

<Technical Field>

The present invention relates to a lithium-nickel-manganese composite oxide for use as, e.g., a positive-electrode material for secondary batteries, processes for producing the oxide, and a lithium ion secondary battery employing the oxide.

<Background Art>

There are rapid trends in recent years toward size reduction and cordlessness in AV appliances, portable telephones, personal computers, etc., and lithium ion secondary batteries employing $LiCoO_2$, $LiNiO_2$, $LiMn_2O_4$, or the like in the positive electrode are being enthusiastically investigated as power sources for operating these appliances. However, these positive-electrode materials each are hardly regarded as a material satisfying all of electrochemical capacity, safety, and cost.

Recently, rhombohedral Li-Ni-Mn composite oxides such as $LiNi_{0.5}Mn_{0.5}O_2$ were disclosed as a material satisfying a high energy density, safety, and cost (e.g., non-patent document 1). This $LiNi_{0.5}Mn_{0.5}O_2$ is basically different in conception from the $LiNi_{1-X}Mn_XO_2$ type materials heretofore in use which have a structure formed by replacing nickel in $LiNiO_2$ by manganese. It is disclosed that a new function is imparted not by improving properties of $LiNiO_2$ or $LiMnO_2$ by the replacement of nickel or manganese with manganese or nickel but by evenly dispersing nickel and manganese to form a solid solution (patent document 1).

However, the electrochemical properties of the positive-electrode materials employing the $LiNi_{0.5}Mn_{0.5}O_2$ which have been proposed so far have been still insufficient in output characteristics and charge/discharge cycle characteristics as compared with materials heretofore in use, such as $LiCoO_2$, $LiNiO_2$, and $LiMn_2O_4$.

There is a disclosure to the effect that the Rietveld analysis of an XRD pattern of the $LiNi_{0.5}Mn_{0.5}O_2$, on the assumption of the space group R-3m, gave results indicating that cation mixing had occurred (non-patent document 2). It was thought that this structural irregularity influences output characteristics, etc.

It has been reported that in the $LiNi_{0.5}Mn_{0.5}O_2$ which has been proposed, the nickel and manganese in the transition metal layers, i.e., at the 3a sites, are evenly dispersed in a ratio of 1:1 to form a solid solution. Separately from this, it is disclosed that the nickel and manganese form a superlattice structure represented by $\sqrt{3}\times\sqrt{3}[R30]$ in terms of the WOOD notation (e.g., patent document 2 and non-patent document 3). In the case of the hexagonal system, there have been problems that the transition metal layers are apt to be distorted by the formation of a solid solution or a superlattice structure, the reproducibility of cycle retention or output characteristics is poor, and industrial production is difficult.

For synthesizing such an Li-Ni-Mn composite oxide, the dry mixing method has hitherto been used in which powders of NiO, MnO, LiOH, etc. are mixed together to obtain the composite oxide (non-patent document 4).

However, in the case of a composite oxide of lithium, nickel, and manganese, impurities generate due to local unevenness in composition and this results in low crystallinity and difficulties in obtaining sufficient electrochemical properties.

A process for $LiNi_{0.5}Mn_{0.5}O_2$ production which has been disclosed is a process in which a nickel-manganese composite hydroxide and a lithium compound are used (patent document 1). However, industrial production by this process has been difficult because the manganese hydroxide is unstable and, hence, impurities are apt to generate.

Furthermore, processes in which a transition metal composite carbonate and a lithium compound are used have been disclosed as a process for obtaining an $LiNi_{1-a-b}Mn_aCo_bO_2$ comprising a solid solution of Mn and Co in $LiNiO_2$ or for obtaining $LiCo_{1-a-b}Ni_aMn_bO_2$ comprising a solid solution of Ni and Mn in $LiCoO_2$ (patent document 3 and patent document 4). However, in these processes also, impurities are apt to generate due to local unevenness in the proportion of the carbonate to the lithium compound and industrial production has been difficult.

In addition, in those processes, it has been difficult to regulate the shape of secondary particles and to obtain a high packing density of a product.

[Patent Document 1] JP-A-2002-042813
[Patent Document 2] JP-A-2003-086183
[Patent Document 3] JP-A-11-307094
[Patent Document 4] JP-A-2002-313338
[Non-Patent Document 1] Ohzuku et al., *Dai 41-kai Denchi Tôronkai Yôkôshû,* (2000) 460-461
[Non-Patent Document 2] Nakano et al., *Journal of the Ceramic Society of Japan,* 111[1] 33-36 (2003)
[Non-Patent Document 3] *J. Electrochem. Soc.,* Vol.141, p.2010 (1994)
[Non-Patent Document 4] E. Rossen et al., *Solid State Ionics,* 57 (1992) 311-318

<Disclosure of the Invention>

In view of the problems of related-art techniques described above, an object of the invention is to provide a positive active material for lithium ion secondary batteries which attains a high discharge capacity, is excellent in rate characteristics and cycle characteristics, and has sufficient crystallinity, and to provide processes for producing the active material and a lithium secondary battery employing this positive active material.

The present inventors made intensive investigations in order to overcome the problems described above. As a result, a lithium-nickel-manganese composite oxide which is represented by $Li_xNi_yMn_zO_2$ wherein x is $1+1/9\pm(1+1/9)/10$, y is $4/9\pm(4/9)/10$, and z is $4/9\pm(4/9)/10$, in particular, represented by the general formula $Li[Ni_{0.5-0.5X}Mn_{0.5-0.5X}Li_X]O_2$, and has a crystal structure belonging to the monoclinic system and having a space group of C12/m1 (No. 12) was found to show excellent electrochemical properties.

It has been further found that the lithium-nickel-manganese composite oxide is a positive active material for lithium ion secondary batteries which has an especially high discharge capacity, is excellent in output characteristics and cycle characteristics, and has sufficient crystallinity, when the composite oxide is one in which in X-ray powder diffractometry using a Cu-$K_\alpha$ ray, the peak intensity ratio $I_{(002)}/I_{(13-3)}$ between the (002) plane and the (13-3) plane in terms of Miller indexes *hkl* on the assumption of belonging to the monoclinic system is from 1.35 to 1.95, more preferably from 1.50 to 1.95, and in which the lattice constants in the monoclinic system (C12/m) are as follows: a = $(5.00\pm0.5)\times n_1$ angstroms, b = $(8.67\pm0.87)\times n_2$ angstroms, c = $(5.05\pm0.51)\times n_3$ angstroms, $n_1$ to $n_3$ = integer of 1-5, $\alpha = \gamma = 90.00°$, and $\beta = 109.41\pm10.94°$, and the proportion of lithium-occupied sites in the layers consisting mainly of lithium, i.e., at the 2c sites and the 4h sites in the C12/ml structure, as determined by the Rietveld analysis, is 93.5% or higher. The invention has been thus completed.

<Brief Description of the Drawings>

Fig. 1 shows X-ray diffraction patterns of the lithium-nickel-manganese composite oxides obtained in Examples 4 to 8 and Comparative Example 4;
Fig. 2 shows DSC curves of lithium-nickel-manganese composite oxides (Example 9);
Fig. 3 shows X-ray diffraction patterns of the lithium-nickel-manganese composite oxides obtained in Examples 10 to 14; and
Fig. 4 shows X-ray diffraction patterns (2θ = 17-24° and 60-70°) of the lithium-nickel-manganese composite oxide obtained according to Example 10.

<Best Mode for Carrying Out the Invention>

The invention will be explained below in detail.

The lithium-nickel-manganese composite oxide of the invention has a composition represented by $Li_xNi_yMn_zO_2$ wherein x is $1+1/9\pm(1+1/9)/10$, y is $4/9\pm(4/9)/10$, and z is $4/9\pm(4/9)/10$, preferably x is $1+1/9\pm(1+1/9)/20$, y is $4/9\pm(4/9)/20$, and z is $4/9\pm(4/9)/20$.

When the composition is within that range, the lithium at the 2b sites, nickel at the 4i and 4g sites, and manganese at the 8i sites are regularly arranged as transition metal layers and the development of a layer structure and crystallinity are maximized. In case where the composition is outside the range in which x is $1+1/9\pm(1+1/9)/10$, y is $4/9\pm(4/9)/10$, and z is $4/9\pm(4/9)/10$, the transition metal layers form a solid solution and cation mixing occurs between the lithium layers and the transition metal layers, resulting in impaired rate characteristics and impaired cycle characteristics.

The lithium-nickel-manganese composite oxide of the invention preferably is one whose composition, which is within the range shown above, is represented by the general formula Li $[Ni_{0.5-0.5X}Mn_{0.5-0.5X}Li_X]O_2$ wherein X satisfies $0.03\leq X\leq0.15$, especially $0.05\leq X\leq0.11$.

In case where X is smaller than 0.03, the inclusion of nickel into the layers consisting mainly of lithium, i.e., cation mixing, is not sufficiently inhibited and both output characteristics and charge/discharge cycle characteristics tend to decrease. Although battery capacity theoretically tends to decrease as the value of X increases, values of X exceeding 0.15 are apt to result in a decrease in battery capacity.

The lithium-nickel-manganese composite oxide of the invention has a layered rock salt structure and preferably is one in which in X-ray powder diffractometry using a Cu-$K_\alpha$ ray, the peak intensity ratio $I_{(002)}/I_{(13-3)}$ between the (002) plane and the (13-3) plane in terms of Miller indexes *hkl* on the assumption of belonging to the monoclinic system is from 1.35 to 1.95, especially from 1.50 to 1.95. In X-ray diffractometry, the peak positions for the (002) plane and (13-3) plane in terms of Millar indexes *hkl* on the assumption of belonging to the monoclinic system overlap those for the (003) plane and (104) plane in terms of Millar indexes *hkl* on the assumption of belonging to the hexagonal system. Conse-

quently, that $I_{(002)}/I_{(13-3)}$ ratio substantially coincides with the peak intensity ratio $I_{(003)}/I_{(104)}$ on the assumption of belonging to the hexagonal system in X-ray powder diffractometry using a Cu-K$_\alpha$ ray.

That peak intensity ratio could be an index to cation mixing. High values of the intensity ratio are thought to indicate a developed layer structure and a high degree of crystal completion, while low values of the intensity ratio are thought to show a disordered layer structure caused by cation mixing {Ohzuku et al., *J. Electrochem. Soc.,* vol.140, No. 7, pp.1862-1870 (1993)}. In case where X is smaller than 0.03, that peak intensity ratio tends to be low.

The lithium-nickel-manganese composite oxide of the invention preferably is one in which the proportion of lithium-occupied sites in the layers consisting mainly of lithium in the space group C12/ml, as determined by the Rietveld analysis, is such that the proportion of lithium-occupied sites in the 2c sites is 93.5% or higher and the proportion of lithium-occupied sites in the 4h sites is 93.5% or higher. As the value of X increases, the proportion of lithium-occupied sites in the 2c and 4h sites (layers consisting mainly of lithium) tends to improve and output properties and charge/discharge cycle characteristics are improved.

The lithium-nickel-manganese composite oxides heretofore in use have been apt to suffer local distortion because the nickel and manganese in the layers consisting mainly of transition metals are statistically dispersed. In contrast, the lithium-nickel-manganese composite oxide of the invention is a lithium-nickel-manganese composite oxide which comprises crystals having a developed layer structure belonging to C12/m1 of the monoclinic system, which is an ideal layer structure, and in which the lithium at the 2c sites, nickel in the 4i and 4g sites, and manganese in the 8i sites are regularly arranged as transition metal layers and the development of the layer structure and crystallinity have been maximized.

The lithium-nickel-manganese composite oxide of the invention is one which should belong to C12/ml (No. 12) of the monoclinic system, and the lattice constants are preferably as follows: a = $(5.00\pm0.5)\times n_1$ angstroms, b = $(8.67\pm0.87)\times n_2$ angstroms, c = $(5.05\pm0.51)\times n_3$ angstroms, $n_1$ to $n_3$ = integer of 1-5, $\alpha = \gamma = 90.00°$, and $\beta =$ $109.41\pm10.94°$. Especially preferably, $n_1$ to $n_3$ = 1, or $n_1$ = 3 and $n_2$ and $n_3$ = 1. Most preferred are: a = 15.00 angstroms, b = 8.67 angstroms, c = 5.05 angstroms, $\alpha = \gamma = 90°$, and $\beta = 109.41°$. In case where the lattice constants are outside the ranges, layered structure development is reduced, leading to a reduced capacity and a decrease in cycle characteristics. Incidentally, lattice constants can be determined by X-ray powder diffractometry.

The lithium-nickel-manganese composite oxide of the invention preferably is one in which the crystal lattice has atomic fraction coordinates represented by Table 1 and/or Table 2 and the ranges thereof are within $\pm10\%$ of the respective coordinate values, more preferably within $\pm5\%$ of the respective coordinate values. The lithium-nickel-manganese composite oxide may be aggregates of single crystals having fraction coordinates represented by Table 1 and/or Table 2 or may be mixed crystals made up of individual substances combined with each other.

When the crystal lattice has atomic fraction coordinates within the ranges shown above, the crystals have a developed layered structure and the formation of a solid solution in the transition metal layers and cation mixing between the lithium layers and the transition metal layers are inhibited. Thus, rate characteristics and cycle characteristics are improved.

The atomic fraction coordinates can be identified by analyzing, by the Rietveld method or Le Bail method, found values obtained by X-ray powder diffractometry.

Table 1 Atomic Fraction Coordinates

| Atom | wyck | x | y | z |
|------|------|------|------|------|
| ○ | 4i | 0.2600 | 0.0000 | 0.7730 |
| ○ | 4i | 0.5940 | 0.0000 | 0.7730 |
| ○ | 4i | 0.9270 | 0.0000 | 0.7730 |
| ○ | 8i | 0.0850 | 0.3210 | 0.2230 |
| ○ | 8i | 0.4180 | 0.3210 | 0.2230 |
| ○ | 8i | 0.7510 | 0.3210 | 0.2230 |
| Li | 2b | 0.0000 | 0.5000 | 0.0000 |
| Li | 2c | 0.0000 | 0.0000 | 0.5000 |
| Li | 4i | 0.3330 | 0.0000 | 0.5000 |
| Li | 4h | 0.0000 | 0.3380 | 0.5000 |
| Li | 8i | 0.3330 | 0.3380 | 0.5000 |
| Mn | 4i | 0.1670 | 0.0000 | 1.0000 |

Table continued

| Atom | wyck | x | y | z |
|------|------|--------|--------|--------|
| Mn | 4g | 0.0000 | 0.8330 | 0.0000 |
| Ni | 8i | 0.3330 | 0.8330 | 0.0000 |

Table 2 Atomic Fraction Coordinates

| Atom | wyck | x | y | z |
|------|------|--------|--------|--------|
| O | 4i | 0.7400 | 0.0000 | 0.2270 |
| O | 4i | 0.4080 | 0.0000 | 0.2270 |
| O | 4i | 0.0730 | 0.0000 | 0.2270 |
| O | 8i | 0.0850 | 0.3210 | 0.2230 |
| O | 8i | 0.4180 | 0.3210 | 0.2230 |
| O | 8i | 0.7510 | 0.3210 | 0.2230 |
| Li | 2b | 0.0000 | 0.5000 | 0.0000 |
| Li | 2c | 0.0000 | 0.0000 | 0.5000 |
| Li | 4i | 0.6670 | 0.0000 | 0.5000 |
| Li | 4h | 0.0000 | 0.6620 | 0.5000 |
| Li | 8i | 0.3330 | 0.3380 | 0.5000 |
| Mn | 4i | 0.8330 | 0.0000 | 1.0000 |
| Mn | 4g | 0.0000 | 0.1670 | 0.0000 |
| Ni | 8i | 0.3330 | 0.8330 | 0.0000 |

The lithium-nickel-manganese composite oxide of the invention preferably has a sulfur element content of 1,500 ppm or lower. In case where the positive active material contains a sulfur ingredient, e.g., sulfuric acid radicals, this may considerably reduce the cycle characteristics of secondary batteries employing carbon as the negative electrode.

Processes for producing the lithium-nickel-manganese composite oxide of the invention will be explained next.

One process for producing the lithium-nickel-manganese composite oxide of the invention can be conducted by any of various methods such as, e.g., the neutralization coprecipitation method, powder mixing method, and solid/liquid mixing method.

An especially preferred nickel manganese compound is a nickel-manganese composite oxide of the ilmenite structure because of its high reactivity with lithium compounds. The nickel-manganese composite oxide of the ilmenite structure can be obtained by burning a nickel-manganese coprecipitation product obtained by a coprecipitation operation, such as a nickel-manganese composite hydroxide, nickel-manganese composite carbonate, or nickel-manganese composite oxalate. This nickel-manganese coprecipitation product more preferably has a homogeneous crystalline phase comprising a solid solution between nickel and manganese.

A lithium compound such as the hydroxide, acetate, carbonate, oxalate, nitrate, chloride, sulfate, or the like can be used as a starting material. It is, however, preferred to use the hydroxide or carbonate, because these lithium compounds have a low decomposition temperature and do not generate a corrosive gas.

Besides the dry mixing method, effective methods for mixing a nickel-manganese starting material, e.g., a nickel-manganese composite oxide of the ilmenite structure, with a lithium compound include a method using a wet slurry which comprises dispersing or dissolving the lithium salt in, e.g., water or an alcohol, impregnating the nickel-manganese composite oxide with the dispersion or solution, and then drying and burning the composite oxide. The slurry may be spray-dried. It is essential that the burning should be conducted in an oxygenic atmosphere. In case where the burning is conducted in an oxygen-free atmosphere, e.g., nitrogen or argon, the oxide is reduced and, hence, the target compound is not obtained. The term oxygenic atmosphere herein means air or an atmosphere having a higher partial oxygen pressure than air, such as, e.g., pure oxygen.

After the nickel-manganese compound and the lithium compound have been mixed together by the dry or wet method, the mixture is subjected to the step of burning in an oxygenic atmosphere at a temperature of from 750°C to 1,200°C, whereby the target compound can be obtained.

In the case of using a nickel-manganese composite oxide of the ilmenite structure, the burning temperature is preferably set so as to be in the range of from 750°C to 1,200°C. Burning temperatures lower than 750°C result in insufficient crystallization, while burning temperatures exceeding 1,200°C result in the generation of by-products and structural irregularities, leading to a decrease in battery capacity. It is more preferred to conduct the burning at a temperature in the range of 900-1,000°C, whereby excellent electrochemical properties can be obtained.

With respect to the ratio in which the nickel-manganese compound and the lithium compound are mixed together, it is preferred to mix the lithium compound in an amount larger than in the target composition because the vaporization of lithium occurs during burning. The vaporization of lithium tends to be more enhanced as the value of X increases. Consequently, a compound having the target chemical composition can be obtained by suitably regulating the mixing ratio according to the composition. It is preferred to mix the nickel-manganese composite oxide of the ilmenite structure and the lithium compound so as to result in an Li/(Ni+Mn) atomic ratio of from 1.1 to 1.3 and burn the mixture.

The lithium-nickel-manganese composite oxide of the invention can be produced also by the following process.

The process comprises a first step in which a carbonic acid salt is added to an aqueous solution containing a nickel salt and a manganese salt to precipitate a carbonate of nickel and manganese, a second step in which a lithium compound is added to and mixed with the carbonate of nickel and manganese, a third step in which the mixture is granulated by spray drying, and a fourth step in which the granulated mixture is burned in an oxygen atmosphere at a temperature of 700°C or higher.

In the first step, an aqueous solution of a carbonic acid salt is mixed with an aqueous mixture solution of a nickel salt and a manganese salt to produce a carbonate of nickel and manganese.

As the nickel salt can be used nickel sulfate, nickel nitrate, nickel hydrochloride, or the like. Nickel sulfate is preferred of these because it has neither oxidative properties nor reductive properties. As the manganese salt can be used manganese sulfate, manganese nitrate, manganese hydrochloride, or the like. Manganese sulfate is preferred of these because it has neither oxidative properties nor reductive properties.

The carbonic acid salt is used as a coprecipitating agent. The carbonic acid salt preferably is sodium hydrogen carbonate, sodium carbonate, or a mixture of these.

The amount of the coprecipitating agent to be used is preferably from 1.00 to 1.5 equivalents, more preferably from 1.05 to 1.1 equivalent.

In case where the amount of the coprecipitating agent is smaller than 1.00 equivalent, the carbonate-forming reaction is not completed and a homogeneous carbonate of nickel and manganese is not obtained. In case where the amount thereof is larger than 1.5 equivalents, difficulties are encountered in removing the coprecipitating agent from the mother liquor in a subsequent washing step.

Operation methods for conducting the coprecipitation step are not particularly limited, and this step may be conducted either batchwise or continuously. Preferred examples of the batch method include a method in which an aqueous solution of a carbonic acid salt is supplied to an aqueous mixture solution of a nickel salt and a manganese salt with stirring and, after completion of the supply, the resultant carbonate of nickel and manganese is aged with stirring. Preferred examples of the continuous method include a method in which an aqueous mixture solution of a nickel salt and a manganese salt and an aqueous solution of a carbonic acid salt are fed to a reactor with stirring and the resultant carbonate of nickel and manganese is continuously discharged. Through this operation, a coprecipitation product in which the constituent atoms are in a highly evenly dispersed state can be produced.

The operating pH range in the coprecipitation step is preferably 7-10, more preferably 8-9. Values of pH not higher than 7 are undesirable because nickel carbonate and manganese carbonate dissolve. On the other hand, pH values not lower than 10 are undesirable because nickel hydroxide and manganese hydroxide separate out and this precipitate is susceptible to oxidation and unstable. The operating temperature is preferably kept in the range of 20-100°C, more preferably 40-60°C. In case where the operating temperature is not higher than 20°C, the growth of carbonate crystals becomes poor and it is difficult to obtain a carbonate of nickel and manganese which has a homogeneous crystalline phase. In case where the operating temperature is not lower than 100°C, the aqueous solution boils, making the coprecipitation operation difficult.

After the first step, a washing step is optionally conducted. In this operation, the carbonate of nickel and manganese and the mother liquor resulting from coprecipitation are separated from each other by filtration and washing. Methods for the washing are not particularly limited and the washing may be conducted either batchwise or continuously. Examples thereof include a continuous operation comprising filtration through a belt filter and washing thereon and a batch operation comprising filtration with a filter press and washing by repulping.

In the second step, the carbonate of nickel and manganese and a lithium compound are dispersed in water to give a slurry and this slurry is subjected to wet pulverization/mixing. Examples of the lithium compound include water-soluble ones such as lithium hydroxide and lithium nitrate and water-insoluble ones such as lithium carbonate. It is preferred to use lithium carbonate because it is weakly alkaline and does not oxidize the carbonate of nickel and manganese. The average particle diameter of the lithium compound and the carbonate of nickel and manganese, after the pulverization, is preferably 1 $\mu$m or smaller, more preferably in the range of 0.3-0.7 $\mu$m. As an apparatus for the pulverization/mixing can be used a ball mill, oscillating mill, wet medium-agitating mill, or the like.

After the second step, the slurry which has undergone the wet pulverization/mixing may be granulated by spray drying. Through this operation, granules in which the carbonate of nickel and manganese and the lithium compound have been evenly dispersed can be obtained. The spray drying can be conducted with an ordinary spray dryer of the type in which a slurry is sprayed with a rotary disk or fluid nozzle and the droplets are dried with hot air. Although usable methods for the granulation include the in-liquid granulation method and the rolling granulation method besides spray drying, spray drying is most advantageous industrially.

In the spray drying, the slurry is granulated preferably in such a manner as to give a granulated mixture having an average diameter of 5-30 $\mu$m, more preferably 10-20 $\mu$m. Through this operation, secondary particles having a spherical shape are formed and a high packing density of a product can be obtained.

In the fourth step as a final step, the granulated mixture is burned in an oxygenic atmosphere at a temperature of 700°C or higher to thereby obtain a lithium-nickel-manganese composite oxide of the invention. In case where the temperature is lower than 700°C, the reaction is not completed and this leads to a decrease in capacity and to decreases in rate characteristics and cycle characteristics. The range of the burning temperature is preferably from 750°C to 1,200°C, more preferably from 750°C to 1,000°C, even more preferably from 850°C to 950°C.

Through this burning, a lithium-nickel-manganese composite oxide in which the space group is C12/m1 (No. 12) of the monoclinic system is produced.

It is essential that the burning atmosphere should be an oxygen atmosphere. In case where the burning is conducted in an oxygen-free atmosphere, e.g., nitrogen or argon, reduction occurs and the target product is not obtained. The term oxygen atmosphere herein means an atmosphere having a higher partial oxygen pressure than air.

After the burning, impurities remaining in a slight amount are preferably removed by washing with water. By thus removing hygroscopic salts, cycle characteristics are improved.

The lithium-manganese composite oxide powder of the invention can be advantageously used as the positive active material of a lithium ion secondary battery.

It is preferred that the lithium-manganese composite oxide produced be suitably disaggregated and classified.

The lithium-nickel-manganese composite oxide of the invention preferably has a BET specific surface area of 2.0 m$^2$/g or smaller. Smaller values of BET specific surface area are generally desirable from the standpoint of the amount of the positive active material packed in a secondary battery. In addition, use of the composite oxide having a BET specific surface area exceeding 2.0 m$^2$/g tends to result in a reduced battery capacity. Consequently, the BET specific surface area of the composite oxide preferably satisfies 2.0 m$^2$/g or smaller, more preferably satisfies the range of from 1.0 m$^2$/g to 1.5 m$^2$/g.

<Examples>

The invention will be explained below by reference to the following specific Examples, but the invention should not be construed as being limited by these Examples in any way.

(Method of Producing Positive Electrode for Evaluation of Secondary-Battery Performances)

A lithium-nickel-manganese composite oxide was mixed as a battery positive-electrode material with a polytetrafluoroethylene/acetylene black mixture (trade name: TAB-2) as a conductive material in a weight ratio of 2:1. The resultant mixture was molded into a pellet on a mesh (made of SUS316) at a pressure of 1 ton/cm$^2$. Thereafter, the pellet was vacuum-dried at 150°C to produce a positive electrode for batteries.

(Methods of Charge/Discharge Cycle Test and Output Characteristics Test)

A battery was fabricated using the positive electrode for batteries obtained, a negative electrode comprising a lithium metal foil (thickness, 0.2 mm), and an electrolytic solution prepared by dissolving lithium phosphate hexafluoride in a propylene carbonate/diethyl carbonate mixed solvent in a concentration of 1 mol/dm$^3$. The battery thus produced was subjected at 23°C to charge/discharge in the battery voltage range of from 4.3 V to 2.5 V at a constant current. The charge was conducted at 0.4 mA·cm$^{-2}$, while the discharge was conducted at each of two constant currents, i.e., current densities of 0.4 mA·cm$^{-2}$ and 2.5 mA·cm$^{-2}$. High-rate discharge proportion is expressed in terms of discharge capacity ratio (2.5 mA·cm$^2$/0.4 mA·cm$^{-2}$). The procedure described above was conducted as an output characteristics test. Furthermore, the battery for which a current density of 0.4 mA·cm$^{-2}$ had been used was repeatedly subjected to 50 cycles of charge/discharge under the conditions shown above. The capacity retention in the charge/discharge cycling was determined using the following equation.

$$(Capacity\ retention/\%) = 100 \cdot \{(discharge\ capacity\ in\ 50th\ cycle)/(discharge\ capacity\ in\ 10th\ cycle)\}^{1/40}$$

EXAMPLE 1

To 2,500 g of an aqueous solution of 0.5 mol/L manganese sulfate and 0.5 mol/L nickel sulfate was supplied 5,600 g of 1 mol/L sodium hydrogen carbonate at a rate of 60 g/min while keeping the aqueous solution at 50°C with stirring/mixing. After the supply, the slurry was kept at 50°C with stirring and thus aged for 20 hours. After the aging, the pH of the slurry was 9.8. This slurry was filtered and the solid matter was washed to obtain 600 g of a carbonate of nickel and manganese. A hundred grams of lithium carbonate (99.5 wt%) and an appropriate amount of pure water were added to the carbonate of nickel and manganese to regulate the resultant slurry so as to have a solid concentration of 20 wt%. This slurry was treated with a wet medium-agitating mill to pulverize the particles to an average particle diameter of 0.9 $\mu$m. From this mixture slurry which had undergone pulverization, the water was removed by vaporization with a spray dryer. Thus, dry particles in the form of spherical granules were obtained. The spray drying was conducted at a hot-air inlet temperature of 250°C. The dry particles were burned in an oxygen-containing atmosphere at 950°C for 12 hours to obtain a lithium-nickel-manganese composite oxide. Furthermore, the composite oxide was rinsed in 95°C hot water for 1 hour, recovered by filtration, and then dried to obtain a sample. This sample was composed of spherical particles having an average particle diameter of 12 $\mu$m.

As a result of analysis for composition, the sample was found to have the composition $Li_{1+1/9}Ni_{4/9}Mn_{4/9}O_2$ ($Li_{1.11}Ni_{0.445}Mn_{0.445}O_2$).

In an X-ray diffraction pattern of the product, reflection from the (200) plane, (111) plane, and (310) plane in terms of Miller indexes hkl was observed, which is characteristic of C12/m1 (No. 12) of the monoclinic system.

The found values of the lattice constants were: a = 14.998 angstroms; b = 8.669 angstroms; c = 5.049 angstroms; $\alpha = \gamma = 90°$; and $\beta = 109.411°$.

As a result of the Rietveld analysis, the atomic fraction coordinates were found to be as shown in Table 3.

Table 3 Atomic Fraction Coordinates

| Atom | wyck | x | y | z |
|---|---|---|---|---|
| ○ | 4i | 0.2603 | 0.0000 | 0.7727 |
| ○ | 4i | 0.5937 | 0.0000 | 0.7727 |
| ○ | 4i | 0.9270 | 0.0000 | 0.7727 |
| ○ | 8i | 0.0847 | 0.3212 | 0.2233 |
| ○ | 8i | 0.4180 | 0.3212 | 0.2233 |
| ○ | 8i | 0.7514 | 0.3212 | 0.2233 |
| Li | 2b | 0.0000 | 0.5000 | 0.0000 |
| Li | 2c | 0.0000 | 0.0000 | 0.5000 |
| Li | 4i | 0.3333 | 0.0000 | 0.5000 |
| Li | 4h | 0.0000 | 0.3377 | 0.5000 |
| Li | 8i | 0.3333 | 0.3377 | 0.5000 |
| Mn | 4i | 0.1666 | 0.0000 | 1.0000 |
| Mn | 4g | 0.0000 | 0.8326 | 0.0000 |
| Ni | 8i | 0.3333 | 0.8330 | 0.0000 |

Furthermore, this composite oxide was mixed as a battery positive-electrode material with a conductive material/ binder (acetylene black/Teflon resin) to obtain a positive active material. A coin battery was produced using this positive active material and further using lithium metal as a negative active material and an ethylene carbonate/dimethyl carbonate solution of $LiPF_6$ as an electrolytic solution. This battery was subjected at 23°C to charge/discharge in the battery voltage range of from 4.3 V to 2.5 V at a constant current. The charge was conducted at 0.4 mA·cm$^{-2}$, while the discharge was conducted at each of two constant currents, i.e., 0.4 mA·cm$^{-2}$ and 2.5 mA·cm$^{-2}$. High-rate discharge proportion is expressed in terms of discharge capacity ratio (2.5 mA·cm$^{-2}$/0.4 mA·cm$^{-2}$). As a result, the initial discharge capacity (0.4 mA·cm$^{-2}$) was 14.7 mAh/g and the high-rate discharge proportion was 96.9%.

Moreover, a battery produced by the method described above was subjected to repetitions of charge/discharge in the battery voltage range of from 4.2 V to 2.0 V at a constant current of 1.0 mA·cm$^{-2}$. As a result, the cycle retention, which is the proportion of the discharge capacity in the 50th cycle to the discharge capacity in the 10th cycle, was 99.97%.

EXAMPLE 2

The same procedure as in Example 1 was conducted, except that the amounts of the starting materials to be fed were changed so as to yield a final product having the composition represented by Li$_{1+1/9+(1+1/9)/20}$Ni$_{4/9-(4/9)/20}$Mn$_{4/9-(4/9)/20}$O$_2$ (= Li$_{1.166}$Ni$_{0.422}$Mn$_{0.422}$O$_2$). The product gave an X-ray diffraction pattern characteristic of the crystal system C12/ml.

The initial discharge capacity, high-rate discharge proportion, and cycle retention were 145 mAh/g, 90.7%, and 99.95%, respectively.

EXAMPLE 3

The same procedure as in Example 1 was conducted, except that the amounts of the starting materials to be fed were changed so as to yield a final product having the composition represented by Li$_{1+1/9-(1+1/9)/20}$Ni$_{4/9+(4/9)/20}$Mn$_{4/9+(4/9)/20}$O$_2$ (= Li$_{1.056}$Ni$_{0.467}$Mn$_{0.467}$O$_2$). The product gave an X-ray diffraction pattern characteristic of the crystal system C12/ml.

The initial discharge capacity, high-rate discharge proportion, and cycle retention were 148 mAh/g, 89.2%, and 99.92%, respectively.

COMPARATIVE EXAMPLE 1

The same procedure as in Example 1 was conducted, except that NaOH was used as a coprecipitating agent and the amounts of the starting materials to be fed were changed so as to yield a final product having the composition represented by LiNi$_{0.5}$Mn$_{0.5}$O$_2$.

As a result of analysis for composition, the product was found to have the composition Li$_{1.00}$Ni$_{0.50}$Mn$_{0.50}$O$_2$.

The product gave an X-ray diffraction pattern characteristic of the crystal system R-3m.

The initial discharge capacity, high-rate discharge proportion, and cycle retention were 150 mAh/g, 84.7%, and 99.89%, respectively.

COMPARATIVE EXAMPLE 2

The same procedure as in Example 1 was conducted, except that NaOH was used as a coprecipitating agent and the amounts of the starting materials to be fed were changed so as to yield a final product having the composition represented by Li$_{1+1/9+(1+1/9)/8}$Ni$_{4/9+(4/9)/8}$Mn$_{4/9+(4/9)/8}$O$_2$ (= Li$_{1.25}$Ni$_{0.499}$Mn$_{0.499}$O$_2$).

The product gave an X-ray diffraction pattern characteristic of the crystal system R-3m.

The initial discharge capacity, high-rate discharge proportion, and cycle retention were 139 mAh/g, 83.5%, and 99.85%, respectively.

COMPARATIVE EXAMPLE 3

The same procedure as in Example 1 was conducted, except that NaOH was used as a coprecipitating agent and the amounts of the starting materials to be fed were changed so as to yield a final product having the composition represented by Li$_{1+1/9+(1+1/9)/5}$Ni$_{4/9+(4/9)/5}$Mn$_{4/9+(4/9)/5}$O$_2$ (= Li$_{1.33}$Ni$_{0.53}$Mn$_{0.53}$O$_2$).

The product gave an X-ray diffraction pattern characteristic of the crystal system R-3m.

The initial discharge capacity, high-rate discharge proportion, and cycle retention were 138 mAh/g, 85.5%, and 99.88%, respectively.

The compositions, lattice constants of C12/m, crystal systems, and discharge characteristics in Examples 1 to 3 and Comparative Examples 1 to 3 are shown in Table 4 below.

Table 4

| | Composition | X | Lattice constants in belonging to C12/m1 (angstroms) | Crystal system | Initial discharge capacity (mAh/g) | High-rate discharge proportion (%) | Capacity retention (%) |
|---|---|---|---|---|---|---|---|
| Ex. 1 | $Li[Ni_{0.445}Li_{0.11}Mn_{0.445}]O_2$ | 0.11 | a:14.998, b:8.669, c:5.049 | C12/m1 | 147.0 | 96.9 | 99.97 |
| Ex. 2 | $Li[Ni_{0.417}Li_{0.166}Mn_{0.417}]O_2$ | 0.166 | | C12/m1 | 145.0 | 90.7 | 99.95 |
| Ex. 3 | $Li[Ni_{0.467}Li_{0.056}Mn_{0.467}]O_2$ | 0.056 | | C12/m1 | 148.0 | 89.2 | 99.92 |
| Comp. Ex. 1 | $Li[Ni_{0.50}Mn_{0.50}]O_2$ | 0.00 | | R-3m | 150.0 | 84.7 | 99.89 |
| Comp. Ex. 2 | $Li[Ni_{0.499}Li_{0.25}Mn_{0.499}]O_2$ | 0.25 | | R-3m | 139.0 | 83.5 | 99.85 |
| Comp. Ex. 3 | $Li[Ni_{0.53}Li_{0.33}Mn_{0.53}]O_2$ | 0.33 | | R-3m | 138.0 | 85.5 | 99.88 |

With respect to the following Examples and Comparative Example, the nickel-manganese oxide of the ilmenite structure to be used as a starting material was prepared by the following method.

(Method of Preparing Nickel-Manganese Oxide of Ilmenite Structure)

The nickel-manganese oxide of the ilmenite structure obtained by the following method was used as a starting material.

To 800 mL of a 1.6 mol/L aqueous ammonium solution were simultaneously added dropwise, with stirring and nitrogen bubbling, 450 mL of an aqueous solution containing 0.20 mol of nickel sulfate and 0.20 mol of manganese sulfate dissolved therein and 450 mL of an aqueous solution containing 0.80 mol of sodium hydroxide dissolved therein. The resultant mixture was stirred/mixed at 25°C overnight. Thereafter, 50 mL of a 1.6 mol/L aqueous ammonium solution, 100 mL of 35% aqueous hydrogen peroxide solution, and the nickel-manganese coprecipitation slurry obtained were added in this order to 1.5 L of pure water with stirring. This mixture was stirred for further 3 hours. Thereafter, the precipitate was separated by filtration, dried at 80°C overnight, and burned at 400°C in an air stream for 2 hours.

EXAMPLE 4

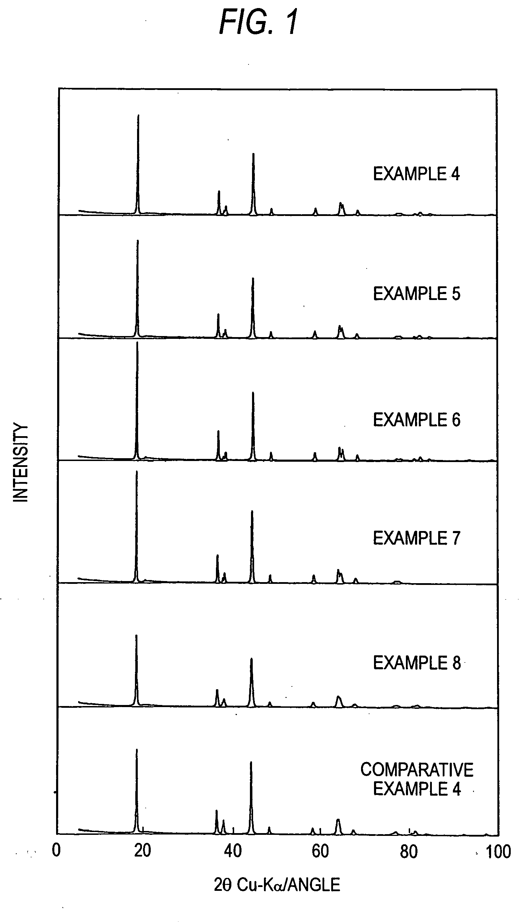

The nickel-manganese oxide of the ilmenite structure, lithium hydroxide monohydrate, and sodium carbonate were mixed together by means of an automatic mortar for 1 hour in such a proportion as to result in an Li/(Ni+Mn) atomic ratio of 1.12. The mixture obtained was burned at 900°C in air stream for 20 hours to obtain a lithium-nickel-manganese composite oxide. As a result of ICP analysis for composition, this composite oxide was found to have the composition Li $[Ni_{0.475}Mn_{0.475}Li_{0.05}]O_2$ (X=0.05). The composite oxide gave the X-ray diffraction pattern shown in Fig. 1, indicating that the oxide had a layered rock salt structure of the $\alpha$-NaFeO$_2$ type.

In the X-ray powder diffractometry using a Cu-K$_\alpha$ ray, the peak intensity ratio $I_{(002)}/I_{(13-3)}$ between the (002) plane and the (13-3) plane in terms of Miller indexes hkl on the assumption of belonging to the monoclinic system was 1.64.

The X-ray powder diffraction pattern was subjected to pattern fitting on the assumption of C12/m1 (No. 12) of the monoclinic/rhombic system according to the WPPD method developed by Toraya et al. (H. Toraya et al., *J. Appl. Cryst.,* 19, 440(1986)). As a result, the a-axis length, b-axis length, and c-axis length were found to be 4.993 angstroms, 8.600, and 5.044 angstroms, respectively, and $\alpha = \gamma = 90.00°$ and $\beta = 109.41 \pm 10.94°$. The BET specific surface area was 1.8 m$^2$g$^{-1}$.

Furthermore, the pattern fitting of the X-ray diffraction pattern by the Rietveld method revealed that the proportion of lithium-occupied sites in the 2c sites was 94.1% and the proportion of lithium-occupied sites in the 4h sites was 95.0%.

As a result of the charge/discharge cycle test, the initial discharge capacity (0.4 mA·cm$^{-2}$), high-rate discharge proportion, and capacity retention (%) were found to be 150.0 mAh/g, 95.8%, and 99.97%, respectively.

EXAMPLE 5

The nickel-manganese oxide of the ilmenite structure and lithium hydroxide monohydrate were mixed together by means of an automatic mortar for 1 hour in such a proportion as to result in an Li/(Ni+Mn) atomic ratio of 1.19. The mixture obtained was burned at 900°C in an air stream for 20 hours to obtain a lithium-nickel-manganese composite oxide. As a result of ICP analysis for composition, this composite oxide was found to have the composition Li $[Ni_{0.46}Mn_{0.46}Li_{0.08}]O_2$ (X=0.08). The composite oxide gave the X-ray diffraction pattern shown in Fig. 1, indicating that the oxide had a layered rock salt structure of the $\alpha$-NaFeO$_2$ type.

In the X-ray powder diffractometry using a Cu-K$_\alpha$ ray, the peak intensity ratio $I_{(002)}/I_{(13-3)}$ between the (002) plane and the (13-3) plane in terms of Miller indexes *hkl* on the assumption of belonging to C12/ml (No. 12) of the monoclinic/rhombic system was 1.78.

The X-ray powder diffraction pattern was subjected to pattern fitting on the assumption of C12/ml (No. 12) of the monoclinic/rhombic system according to the WPPD method developed by Toraya et al. (H. Toraya et al., *J. Appl. Cryst.,* 19, 440(1986)). As a result, the a-axis length, b-axis length, and c-axis length were found to be 4.987 angstroms, 8.602, and 5.031 angstroms, respectively, and $\alpha = \gamma = 90.00°$ and $\beta = 109.41 \pm 10.94°$. The BET specific surface area was 1.6 m$^2$g$^{-1}$.

Furthermore, the pattern fitting of the X-ray diffraction pattern by the Rietveld method revealed that the proportion of lithium-occupied sites in the 2c sites was 95.9% and the proportion of lithium-occupied sites in the 4h sites was 97.4%.

This composite oxide was used as a battery positive-electrode material to conduct the same output characteristics test as in Example 1. As a result, the initial discharge capacity (0.4 mA·cm$^{-2}$) and the high-rate discharge proportion were found to be 146.9 mAh/g and 96.6%, respectively. The charge/discharge cycle test was further conducted and, as a result, the capacity retention was found to be 99.9%.

EXAMPLE 6

The nickel-manganese oxide of the ilmenite structure and lithium hydroxide monohydrate were mixed together by means of an automatic mortar for 1 hour in such a proportion as to result in an Li/(Ni+Mn) atomic ratio of 1.30. The mixture obtained was burned at 900°C in an air stream for 20 hours to obtain a lithium-nickel-manganese composite oxide. As a result of ICP analysis for composition, this composite oxide was found to have the composition Li$[Ni_{0.445}Mn_{0.445}Li_{0.11}]O_2$ (X=0.11). The composite oxide gave the X-ray diffraction pattern shown in Fig. 1, indicating that the oxide had a layered rock salt structure of the $\alpha$-NaFeO$_2$ type.

In the X-ray powder diffractometry using a Cu-K$_\alpha$ ray, the peak intensity ratio $I_{(002)}/I_{(13-3)}$ between the (002) plane and the (13-3) plane in terms of Miller indexes hkl on the assumption of belonging to C12/m1 (No. 12) of the monoclinic/rhombic system was 1.93.

The X-ray powder diffraction pattern was subjected to pattern fitting on the assumption of C12/m1 (No. 12) of the monoclinic/rhombic system according to the WPPD method developed by Toraya et al. (H. Toraya et al., *J. Appl. Cryst.,* 19, 440(1986)). As a result, the a-axis length, b-axis length, and c-axis length were found to be 4.980 angstroms, 8.593, and 5.025 angstroms, respectively, and $\alpha = \gamma = 90.00°$ and $\beta = 109.41 \pm 10.94°$. The BET specific surface area was 1.1 m$^2$g$^{-1}$.

Furthermore, the pattern fitting of the X-ray diffraction pattern by the Rietveld method revealed that the proportion of lithium-occupied sites in the 2c sites was 96.3% and the proportion of lithium-occupied sites in the 4h sites was 97.4%.

This composite oxide was used as a battery positive-electrode material to conduct the same output characteristics test as in Example 1. As a result, the initial discharge capacity (0.4 mA·cm$^{-2}$) and the high-rate discharge proportion were found to be 145.1 mAh/g and 95.0%, respectively. The charge/discharge cycle test was further conducted and, as a result, the capacity retention was found to be 99.99%.

EXAMPLE 7

The nickel-manganese oxide of the ilmenite structure and lithium hydroxide monohydrate were mixed together by means of an automatic mortar for 1 hour in such a proportion as to result in an Li/(Ni+Mn) atomic ratio of 1.36. The mixture obtained was burned at 1,000°C in an air stream for 20 hours to obtain a lithium-sodium-nickel-manganese composite oxide. As a result of ICP analysis for composition, this composite oxide was found to have the composition Li$[Ni_{0.45}Mn_{0.45}Li_{0.10}]O_2$ (X=0.10). The composite oxide gave the X-ray diffraction pattern shown in Fig. 1, indicating that the oxide had a layered rock salt structure of the $\alpha$-NaFeO$_2$ type.

In the X-ray powder diffractometry using a Cu-Ka ray, the peak intensity ratio $I_{(002)}/I_{(13-3)}$ between the (002) plane and the (13-3) plane in terms of Miller indexes *hkl* on the assumption of belonging to C12/ml (No. 12) of the monoclinic/rhombic system was 1.61.

The X-ray powder diffraction pattern was subjected to pattern fitting on the assumption of C12/m1 (No. 12) of the monoclinic/rhombic system according to the WPPD method developed by Toraya et al. (H. Toraya et al., *J. Appl. Cryst.,* 19, 440(1986)). As a result, the a-axis length, b-axis length, and c-axis length were found to be 4.894 angstroms, 8.592, and 5.027 angstroms, respectively, and $\alpha = \gamma = 90.00°$ and $\beta = 109.41 \pm 10.94°$. The BET specific surface area was 0.5 m$^2$g$^{-1}$.

Furthermore, the pattern fitting of the X-ray diffraction pattern by the Rietveld method revealed that the proportion of lithium-occupied sites in the 2c sites was 96.6% and the proportion of lithium-occupied sites in the 4h sites was 98.0%.

This composite oxide was used as a battery positive-electrode material to conduct the same output characteristics test as in Example 1. As a result, the initial discharge capacity (0.4 mA·cm$^{-2}$) and the high-rate discharge proportion were found to be 143.6 mAh/g and 94.9%, respectively. The charge/discharge cycle test was further conducted and, as a result, the capacity retention was found to be 99.96%.

EXAMPLE 8

The nickel-manganese oxide of the ilmenite structure and lithium hydroxide monohydrate were mixed together by means of an automatic mortar for 1 hour in such a proportion as to result in an Li/(Ni+Mn) atomic ratio of 1.12. The mixture obtained was burned at 800°C in an air stream for 40 hours to obtain a lithium-nickel-manganese composite oxide. As a result of ICP analysis for composition, this composite oxide was found to have the composition Li$[Ni_{0.475}Mn_{0.475}Li_{0.05}]O_2$ (X=0.05) . The composite oxide gave the X-ray diffraction pattern shown in Fig. 1, indicating that the oxide had a layered rock salt structure of the $\alpha$-NaFeO$_2$ type.

In the X-ray powder diffractometry using a Cu-K$_\alpha$ ray, the peak intensity ratio $I_{(002)}/I_{(13-3)}$ between the (002) plane and the (13-3) plane in terms of Miller indexes *hkl* on the assumption of belonging to C12/ml (No. 12) of the monoclinic/rhombic system was 1.61.

The X-ray powder diffraction pattern was subjected to pattern fitting on the assumption of C12/m1 (No. 12) of the monoclinic/rhombic system according to the WPPD method developed by Toraya et al. (H. Toraya et al., *J. Appl. Cryst.,* 19, 440(1986)). As a result, the a-axis length, b-axis length, and c-axis length were found to be 4.990 angstroms, 8.600, and 5.041 angstroms, respectively, and $\alpha = \gamma = 90.00°$ and $\beta = 109.41 \pm 10.94°$. The BET specific surface area was 2.0 $m^2g^{-1}$.

Furthermore, the pattern fitting of the X-ray diffraction pattern by the Rietveld method revealed that the proportion of lithium-occupied sites in the 2c sites was 94.1% and the proportion of lithium-occupied sites in the 4h sites was 94.9%.

This composite oxide was used as a battery positive-electrode material to conduct the same output characteristics test as in Example 1. As a result, the initial discharge capacity (0.4 mA·cm$^{-2}$) and the high-rate discharge proportion were found to be 140.6 mAh/g and 94.8%, respectively. The charge/discharge cycle test was further conducted and, as a result, the capacity retention was found to be 99.97%.

COMPARATIVE EXAMPLE 4

The nickel-manganese oxide of the ilmenite structure and lithium hydroxide monohydrate were mixed together by means of an automatic mortar for 1 hour in such a proportion as to result in an Li/(Ni+Mn) atomic ratio of 1.02. The mixture obtained was burned at 900°C in an air stream for 20 hours to obtain a lithium-nickel-manganese composite oxide. As a result of ICP analysis for composition, this composite oxide was found to have the composition $Li_{1.00}Ni_{0.5}Mn_{0.5}O_2$ (X=0.00). The composite oxide gave the X-ray diffraction pattern shown in Fig. 1, indicating that the oxide had a layered rock salt structure of the $\alpha$-NaFeO$_2$ type.

In the X-ray powder diffractometry using a Cu-K$_\alpha$ ray, the peak intensity ratio $I_{(003)}/I_{(104)}$ between the (003) plane and the (104) plane in terms of Miller indexes hkl on the assumption of belonging to the hexagonal system was 1.21. The X-ray powder diffraction pattern was subjected to pattern fitting by the WPPD method. As a result, the a-axis length and the c-axis length were found to be 2.891 angstroms and 14.31 angstroms, respectively. The BET specific surface area was 2.1 $m^2g^{-1}$. Furthermore, the pattern fitting of the X-ray diffraction pattern on the assumption of R-3m structure by the Rietveld analysis revealed that the proportion of lithium-occupied sites in the 3a sites was 89%.

This composite oxide was used as a battery positive-electrode material to conduct the same output characteristics test as in Example 1. As a result, the initial discharge capacity (0.4 mA·cm$^{-2}$) and the high-rate discharge proportion were found to be 146 mAh/g and 82.4%, respectively. The same charge/discharge cycle test as in Example 1 was further conducted and, as a result, the capacity retention was found to be 99.70%.

The chemical compositions, values of X, peak intensity ratios $I_{(002)}/I_{(13-3)}$, c-axis lengths, initial discharge capacity values, high-rate discharge proportions, and capacity retentions in Examples 4 to 8 and Comparative Example 4 are shown in Table 5.

Table 5

| | Composition | x | BET (m²/g) | X-ray diffract-tion peak intensity ratio $I_{(002)}/I_{(13-3)}$ in belonging to C12/m1 | Lattice constants in belonging to C12/m1 (angstroms) | Proportion of Li-occupied sites in 2c sites and 4h sites (C12/m1) and 3a sites (R-3m) (%) | Initial dis-charge capac-ity (mAh/g) | High-rate dis-charge propor-tion (%) | Capac-ity Reten-tion (%) |
|---|---|---|---|---|---|---|---|---|---|
| Ex.4 | $Li[Ni_{0.475}Li_{0.05}Mn_{0.475}]O_2$ | 0.05 | 1.8 | 1.64 | a:4.993, b:8.600, c:5.044 | 94.1(2c), 95.0(4h) | 150.0 | 95.8 | 99.97 |
| Ex.5 | $Li[Ni_{0.46}Li_{0.08}Mn_{0.46}]O_2$ | 0.08 | 1.6 | 1.78 | a:4.987, b:8.602, c:5.031 | 95.9(2c), 97.2(4h) | 146.9 | 96.9 | 99.9 |
| Ex.6 | $Li[Ni_{0.445}Li_{0.11}Mn_{0.445}]O_2$ | 0.11 | 1.1 | 1.93 | a:4.980, b:8.593, c:5.025 | 96.3(2c), 97.4(4h) | 145.1 | 95.0 | 99.99 |
| Ex.7 | $Li[Ni_{0.45}Li_{0.10}Mn_{0.45}]O_2$ | 0.10 | 0.5 | 1.61 | a:4.894, b:8.592, c:5.027 | 96.6(2c), 98.0(4h) | 143.6 | 94.9 | 99.96 |
| Ex.8 | $Li[Ni_{0.475}Li_{0.05}Mn_{0.475}]O_2$ | 0.05 | 2.0 | 1.61 | a:4.990, b:8.600, c:5.0441 | 94.1(2c), 94.9(4h) | 140.6 | 94.8 | 99.97 |
| Comp. Ex.4 | $Li[Ni_{0.50}Mn_{0.50}]O_2$ | 0.00 | 2.1 | 1.21 $I_{(003)}/I_{(104)}$ | a:2.891, c:14.31 (R-3m) | 89(3a) | 146.0 | 82.4 | 99.7 |

EP 1 652 819 A1

The results given above show that the output characteristics and charge/discharge cycle characteristics of the materials of Examples 4 to 8, which were represented by the general formula $Li[Ni_{0.5-0.5X}Mn_{0.5-0.5X}Li_X]O_2$, tended to have been improved as compared with the output characteristics and charge/discharge cycle characteristics of the $Li_{1.00}Ni_{0.5}Mn_{0.5}O_2$ of Comparative Example 4.

EXAMPLE 9

A compound represented by $Li[Ni_{0.5-0.5X}Mn_{0.5-0.5X}Li_X]O_2$ was examined for thermal stability in use as a positive-electrode material.

A battery was produced and this battery was charged to a battery voltage of 4.3 V at a constant current of 0.4 $mA \cdot cm^{-2}$ and 23°C. The charged positive electrode in a pellet form was analyzed by DSC (differential scanning calorimetry) in the presence of an electrolytic solution in a cell sealed in an argon atmosphere. Specific conditions for the analysis by DSC are as follows. As a sample were used 1.5 mg of the positive-electrode material and 1.5 $\mu L$ of an electrolytic solution (prepared by dissolving lithium phosphate hexafluoride in a propylene carbonate/diethyl carbonate mixed solvent in a concentration of 1 $mol/dm^3$). In an argon atmosphere, these sample ingredients were placed in a cell made of SUS (outer diameter, 6 mmΦ; height, 4 mm) and this cell was closed. The cell closed was heated from room temperature to 400°C at a heating rate of 10°C/min to conduct analysis by DSC. $\alpha$-Alumina was used as a standard substance.

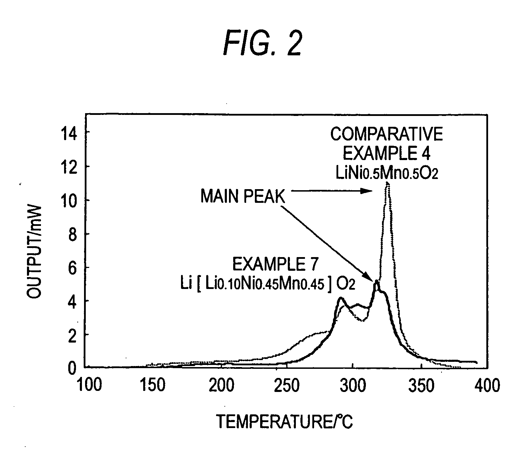

The Li $[Ni_{0.45}Li_{0.10}Mn_{0.45}]O_2$ of Example 7 and the $Li_{1.00}Ni_{0.5}Mn_{0.5}O_2$ of Comparative Example 4 were subjected to the analysis by DSC. As shown in Fig. 2, the two composite oxides did not differ much in heat generation initiation temperature and main peak temperature. The total calorific values of the $Li[Ni_{0.45}Li_{0.10}Mn_{0.45}]O_2$ and the $Li_{1.00}Ni_{0.5}Mn_{0.5}O_2$, as determined from the DSC profiles, were 1,199 $Jg^{-1}$ and 788 $Jg^{-1}$, respectively.

It was thus found that in the $Li[Ni_{0.5-0.5X}Mn_{0.5-0.5X}Li_X]O_2$ of the invention, an increase in the value of X does not considerably impair thermal stability.

EXAMPLE 10

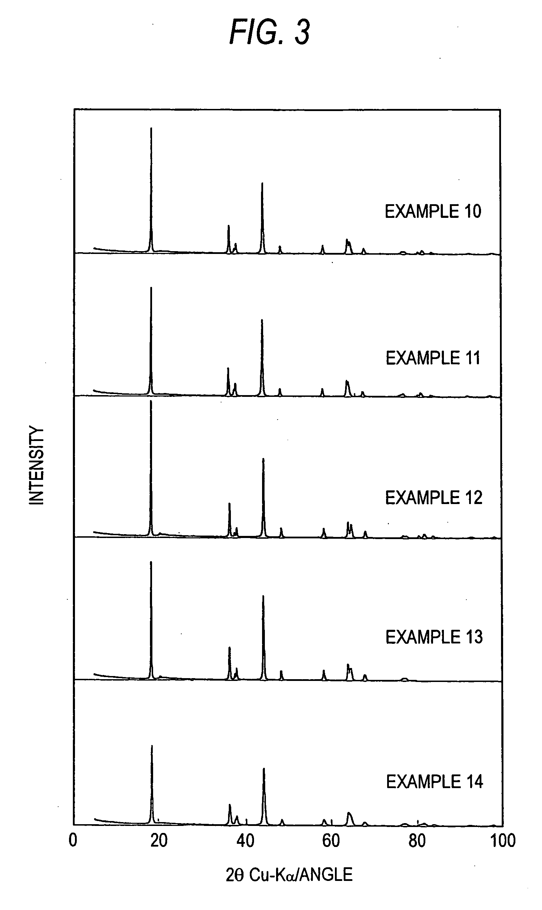

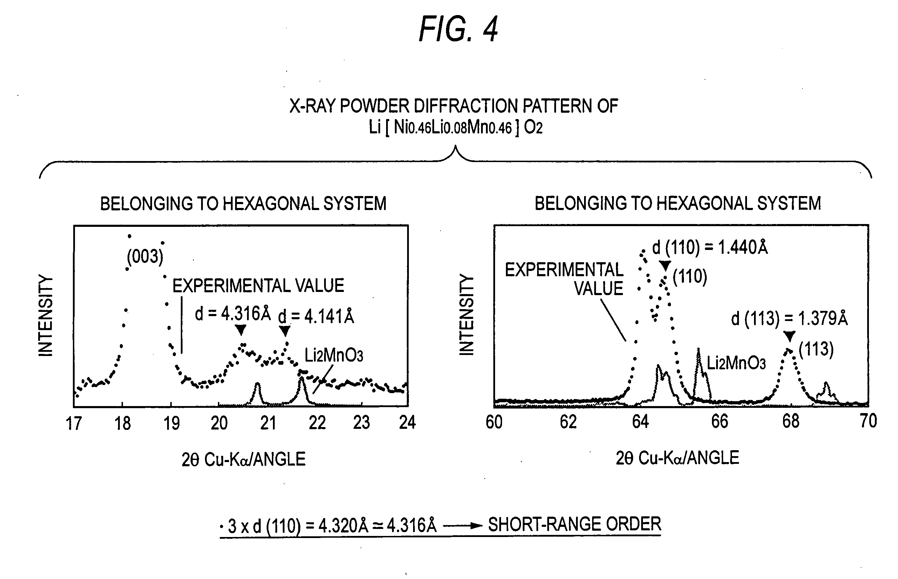

The nickel-manganese oxide of the ilmenite structure was mixed with lithium hydroxide monohydrate by means of an automatic mortar for 1 hour in such a proportion as to result in an {Li/(Ni+Mn)} atomic ratio of 1.19. The mixture obtained was burned at 900°C in an air stream for 20 hours to obtain a lithium-nickel-manganese composite oxide. As a result of ICP analysis for composition, this composite oxide was found to have the composition $Li[Ni_{0.46}Li_{0.08}Mn_{0.46}]O_2$ (X=0.08). The composite oxide gave the X-ray diffraction pattern shown in Fig. 3. Reflection from the (200) plane, (111) plane, and (310) plane in terms of Miller indexes hkl was observed, which is characteristic of C12/m1 (No. 12) of the monoclinic system. Furthermore, as shown in Fig. 4, diffraction peaks which were not attributable to R-3m and indicated a short-range order were clearly observed at 20°-22°. Namely, diffraction peaks appeared at 20°-22° which showed interplanar spacings corresponding to three times the interplanar spacings of the (110) plane and the (113) plane on the assumption of belonging to the hexagonal system, the peaks for which were observed at around 65° and 68° in Fig. 4. The positions of those peaks were clearly different from the positions of the peaks attributable to $Li_2MnO_3$, which is thought to be a by-product. Consequently, the diffraction peaks at 20°-22° were attributed to a superlattice period. In the X-ray powder diffractometry using a Cu-$K_\alpha$ ray, the peak intensity ratio $I_{(002)}/I_{(13-3)}$ between the (002) plane and (13-3) plane in terms of Miller indexes *hkl* on the assumption of belonging to C12/m1 (No. 12) of the monoclinic system was 1.78.

The lattice constants for C12/m1 (No. 12) of the monoclinic system were calculated by the Rietveld method. As a result, the a-axis length, b-axis length, and c-axis length were found to be 4.987 angstroms, 8.602 angstroms, and 5.031 angstroms, respectively, and $\alpha = \gamma = 90°$ and $\beta = 109.32°$.

Furthermore, the pattern fitting of the X-ray diffraction pattern by the Rietveld method revealed that the proportion of lithium-occupied sites in the 2c sites was 95.9% and the proportion of lithium-occupied sites in the 4h sites was 97.2%.

The analysis for composition by the ICP method revealed that the composite oxide had a sulfur element content of 500 ppm.

As a result of the charge/discharge cycle test, the initial discharge capacity (0.4 $mA \cdot cm^{-2}$), high-rate discharge capacity, and capacity retention (%) were found to be 150.0 mAh/g, 96.9%, and 99.97%, respectively.

Moreover, in the charge/discharge cycle test, a negative electrode produced using carbon as a main raw material was used in place of the lithium foil as a negative electrode. Namely, 100 parts by weight of graphite (trade name: MCMB) was mixed with 10 parts by weight of PVDF. N-Methyl-2-pyrrolidone was added thereto in such an amount as to result in a solid content of 58 wt% to prepare a paste. This paste was applied to both sides of a copper foil. The foil coated was dried and then rolled to produce a negative electrode. A battery was produced in the same manner as in the case of using lithium metal as a negative electrode, and the charge/discharge test was conducted. As a result, the capacity retention was 99.89%.

EXAMPLE 11

The nickel-manganese oxide of the ilmenite structure was mixed with lithium hydroxide monohydrate by means of an automatic mortar for 1 hour in such a proportion as to result in an {Li/(Ni+Mn)} atomic ratio of 1.19. The mixture obtained was burned at 900°C in air stream for 20 hours to obtain a lithium-nickel-manganese composite oxide. As a result of ICP analysis for composition, this composite oxide was found to have the composition Li[Ni$_{0.485}$Li$_{0.03}$Mn$_{0.485}$]O$_2$ (X=0.03). The composite oxide gave the X-ray diffraction pattern shown in Fig. 3. Reflection from the (200) plane, (111) plane, and (310) plane in terms of Miller indexes hkl was observed, which is characteristic of C12/m1 (No. 12) of the monoclinic system. In the X-ray powder diffractometry using a Cu-K$_\alpha$ ray, the peak intensity ratio I$_{(002)}$/I$_{(13-3)}$ between the (002) plane and (13-3) plane in terms of Miller indexes *hk1* on the assumption of belonging to C12/m1 (No. 12) of the monoclinic system was 1.41.

The lattice constants for C12/m1 (No. 12) of the monoclinic system were calculated by the Rietveld method. As a result, the a-axis length, b-axis length, and c-axis length were found to be 5.010 angstroms, 8.651 angstroms, and 5.039 angstroms, respectively, and $\alpha = \gamma = 90°$ and $\beta = 109.31°$.

Furthermore, the pattern fitting of the X-ray diffraction pattern by the Rietveld method revealed that the proportion of lithium-occupied sites in the 2c sites was 93.9% and the proportion of lithium-occupied sites in the 4h sites was 94.2%.

This composite oxide was used as a battery positive-electrode material to conduct the same output characteristics test as in Example 11. As a result, the initial discharge capacity (0.4 mA·cm$^{-2}$) and the high-rate discharge proportion were found to be 149.9 mAh/g and 93.8%, respectively. The charge/discharge cycle test was further conducted and, as a result, the capacity retention was found to be 99.90%.

EXAMPLE 12

The nickel-manganese oxide of the ilmenite structure was mixed with lithium hydroxide monohydrate by means of an automatic mortar for 1 hour in such a proportion as to result in an {Li/(Ni+Mn)} atomic ratio of 1.45. The mixture obtained was burned at 900°C in air stream for 20 hours to obtain a lithium-nickel-manganese composite oxide. As a result of ICP analysis for composition, this composite oxide was found to have the composition Li[Ni$_{0.425}$Li$_{0.15}$Mn$_{0.425}$]O$_2$ (X=0.15).

The composite oxide gave the X-ray diffraction pattern shown in Fig. 3. Reflection from the (200) plane, (111) plane, and (310) plane in terms of Miller indexes hkl was clearly observed, which is characteristic of C12/m1 (No. 12) of the monoclinic system. Furthermore, diffraction peaks which were not attributable to R-3m and indicated a short-range order were clearly observed at 20°-22°. In the X-ray powder diffractometry using a Cu-K$_\alpha$ ray, the peak intensity ratio I$_{(002)}$/I$_{(13-3)}$ between the (002) plane and (13-3) plane in terms of Miller indexes hkl on the assumption of belonging to C12/m1 (No. 12) of the monoclinic system was 1.77.

The lattice constants for C12/m1 (No. 12) of the monoclinic system were calculated by the Rietveld method. As a result, the a-axis length, b-axis length, and c-axis length were found to be 4.970 angstroms, 8.586 angstroms, and 5.023 angstroms, respectively, and $\alpha = \gamma = 90°$ and $\beta = 109.26°$. Furthermore, the pattern fitting of the X-ray diffraction pattern by the Rietveld method revealed that the proportion of lithium-occupied sites in the 2c sites was 98.0% and the proportion of lithium-occupied sites in the 4h sites was 99.1%.

Next, this composite oxide was used as a battery positive-electrode material to conduct the same output characteristics test as in Example 11. As a result, the initial discharge capacity (0.4 mA·cm$^{-2}$) and the high-rate discharge proportion were found to be 135.8 mAh/g and 92.7%, respectively. The charge/discharge cycle test was further conducted and, as a result, the capacity retention was found to be 99.99%.

EXAMPLE 13

To 800 mL of a 1.6 mol/L aqueous ammonium solution were simultaneously added dropwise, with stirring and nitrogen bubbling, 450 mL of an aqueous solution containing 0.20 mol of nickel sulfate and 0.20 mol of manganese sulfate dissolved therein and 450 mL of an aqueous solution containing 0.80 mol of sodium hydroxide dissolved therein. The resultant mixture was stirred/mixed at 25°C overnight. Thereafter, 50 mL of a 1.6 mol/L aqueous ammonium solution, 100 mL of 35% aqueous hydrogen peroxide solution, and the nickel-manganese coprecipitation slurry obtained were added in this order to 1.5 L of pure water with stirring. This mixture was stirred for further 3 hours. Thereafter, the precipitate was separated by filtration, washed with 10 L of pure water, subsequently dried at 80°C overnight, and then burned at 400°C in an air stream for 2 hours. Thus, a nickel-manganese oxide of the ilmenite structure was obtained.

The nickel-manganese oxide of the ilmenite structure was mixed with lithium hydroxide monohydrate by means of an automatic mortar for 1 hour in such a proportion as to result in an {Li/(Ni+Mn)} atomic ratio of 1.12. The mixture obtained was burned in air stream according to a burning temperature profile in which the mixture was heated to 1,050°C at 100°C/hr and cooled at 100°C/hr after 1,050°C had been reached. Thus, a lithium-nickel-manganese composite oxide was obtained.

As a result of ICP analysis for composition, this composite oxide was found to have the composition Li $[Ni_{0.475}Li_{0.05}Mn_{0.475}]O_2$ (X=0.05). The composite oxide gave the X-ray diffraction pattern shown in Fig. 3. Reflection from the (200) plane, (111) plane, and (310) plane in terms of Miller indexes hkl was observed, which is characteristic of C12/m1 (No. 12) of the monoclinic system.

In the X-ray powder diffractometry using a Cu-$K_\alpha$ ray, the peak intensity ratio $I_{(002)}/I_{(13-3)}$ between the (002) plane and (13-3) plane in terms of Miller indexes hkl on the assumption of belonging to C12/m1 (No. 12) of the monoclinic system was 1.45.

The lattice constants for C12/m1 (No. 12) of the monoclinic system were calculated by the Rietveld method. As a result, the a-axis length, b-axis length, and c-axis length were found to be 4.992 angstroms, 8.595 angstroms, and 5.044 angstroms, respectively, and $\alpha = \gamma = 90°$ and $\beta = 109.27°$.

Furthermore, the pattern fitting of the X-ray diffraction pattern by the Rietveld method revealed that the proportion of lithium-occupied sites in the 2c sites was 94.8% and the proportion of lithium-occupied sites in the 4h sites was 96.2%.

This composite oxide was used as a battery positive-electrode material to conduct the same output characteristics test as in Example 11. As a result, the initial discharge capacity (0.4 mA·cm$^{-2}$) and the high-rate discharge proportion were found to be 145.9 mAh/g and 93.1%, respectively. The charge/discharge cycle test was further conducted and, as a result, the capacity retention was found to be 99.89%.

EXAMPLE 14

To 800 mL of pure water were simultaneously added dropwise, with stirring, 450 mL of an aqueous solution containing 0.20 mol of nickel chloride and 0.20 mol of manganese chloride dissolved therein and 450 mL of an aqueous solution containing 0.80 mol of sodium hydroxide dissolved therein. The resultant mixture was stirred/mixed at 25°C overnight. Thereafter, the precipitate was separated by filtration, washed with 10 L of pure water, subsequently dried at 80°C overnight, and then burned at 400°C in an air stream for 2 hours. Thus, a nickel-manganese oxide of the ilmenite structure was obtained.

The nickel-manganese oxide of the ilmenite structure was mixed with lithium hydroxide monohydrate by means of an automatic mortar for 1 hour in such a proportion as to result in an {Li/(Ni+Mn)} atomic ratio of 1.12. The mixture obtained was burned in air stream according to a burning temperature profile in which the mixture was heated to 1,050°C at 100°C/hr and cooled at 100°C/hr after 1,050°C had been reached. Thus, a lithium-nickel-manganese composite oxide was obtained.

As a result of ICP analysis for composition, this composite oxide was found to have the composition Li $[Ni_{0.475}Li_{0.05}Mn_{0.475}]O_2$ (X=0.05) . The composite oxide gave the X-ray diffraction pattern shown in Fig. 3. Reflection from the (200) plane, (111) plane, and (310) plane in terms of Miller indexes hkl was observed, which is characteristic of C12/ml (No. 12) of the monoclinic system.

In the X-ray powder diffractometry using a Cu-$K_\alpha$ ray, the peak intensity ratio $I_{(002)}/I_{(13-3)}$ between the (002) plane and (13-3) plane in terms of Miller indexes hkl on the assumption of belonging to C12/m1 (No. 12) of the monoclinic system was 1.42.

The lattice constants for C12/ml (No. 12) of the monoclinic system were calculated by the Rietveld method. As a result, the a-axis length, b-axis length, and c-axis length were found to be 4.987 angstroms, 8.602 angstroms, and 5.032 angstroms, respectively, and $\alpha = \gamma = 90°$ and $\beta = 109.28°$.

Furthermore, the pattern fitting of the X-ray diffraction pattern by the Rietveld method revealed that the proportion of lithium-occupied sites in the 2c sites was 93.8% and the proportion of lithium-occupied sites in the 4h sites was 93.9%.

This composite oxide was used as a battery positive-electrode material to conduct the same output characteristics test as in Example 11. As a result, the initial discharge capacity (0.4 mA·cm$^{-2}$) and the high-rate discharge proportion were found to be 140.4 mAh/g and 92.4%, respectively. The charge/discharge cycle test was further conducted and, as a result, the capacity retention was found to be 99.90%.

The chemical compositions, values of X, peak intensity ratios $I_{(002)}/I_{(13-3)}$, c-axis lengths, initial discharge capacity values, high-rate discharge proportions, and capacity retentions in Examples 10 to 14 are shown in Table 6.

Table 6

| | Composition | X | X-ray diffraction peak intensity ratio $I_{(002)}/I_{(13-3)}$ in belonging to C12/m1 | Lattice constants in belonging to C12/m1 (angstroms) | Proportion of Li-occupied sites in 2c sites and 4h sites (C12/m1) and 3a sites (R-3m) (%) | Initial dis-charge capac-ity (mAh/g) | High-rate dis-charge propor-tion (%) | Capac-ity Reten-tion (%) |
|---|---|---|---|---|---|---|---|---|
| Ex. 10 | $Li[Ni_{0.46}Li_{0.08}Mn_{0.46}]O_2$ | 0.08 | 1.78 | a:4.987, b:8.602, c:5.031 | 95.9 (2c), 97.2 (4h) | 150.0 | 96.9 | 99.97 |
| Ex. 11 | $Li[Ni_{0.485}Li_{0.03}Mn_{0.485}]O_2$ | 0.03 | 1.41 | a:5.010, b:8.651, c:5.039 | 93.9 (2c), 94.2 (4h) | 149.9 | 93.8 | 99.90 |
| Ex. 12 | $Li[Ni_{0.425}Li_{0.15}Mn_{0.425}]O_2$ | 0.15 | 1.77 | a:4.970, b:8.586, c:5.023 | 98.0 (2c), 99.1 (4h) | 135.8 | 92.7 | 99.99 |
| Ex. 13 | $Li[Ni_{0.475}Li_{0.05}Mn_{0.475}]O_2$ | 0.05 | 1.45 | a:4.992, b:8.595, c:5.044 | 94.8 (2c), 96.2 (4h) | 145.9 | 93.1 | 99.89 |
| Ex. 14 | $Li[Ni_{0.475}Li_{0.05}Mn_{0.475}]O_2$ | 0.05 | 1.42 | a:4.987, b:8.602, c:5.032 | 93.8 (2c), 93.9 (4h) | 140.4 | 92.4 | 99.90 |

While the invention has been described in detail and with reference to specific embodiments thereof, it will be apparent to one skilled in the art that various changes and modifications can be made therein without departing from the spirit and scope thereof.

This application is based on a Japanese patent application filed on July 18, 2003 (Application No. 2003-199205) and a Japanese patent application filed on August 25, 2003 (Application No. 2003-208657), the contents thereof being herein incorporated by reference.

<Industrial Applicability>

By using the lithium-nickel-manganese composite oxide of the invention and the processes of the invention for producing the composite oxide, a positive active material having a high capacity and excellent in rate characteristics and cycle characteristics and a lithium ion secondary battery employing this active material can be provided.

**Claims**

1. A lithium-nickel-manganese composite oxide which is a composite oxide comprising Li, Ni, and Mn, the composite oxide having a composition represented by $Li_xNi_yMn_zO_2$ wherein x is $1+1/9\pm(1+1/9)/10$, y is $4/9\pm(4/9)/10$, and z is $4/9\pm(4/9)/10$ and having a crystal structure which belongs to the monoclinic system and has a space group of C12/m1 (No. 12).

2. The lithium-nickel-manganese composite oxide of claim 1, **characterized by** being represented by the general formula Li $[Ni_{0.5-0.5X}Mn_{0.5-0.5X}Li_X]O_2$ wherein X satisfies $0.03\leq X\leq 0.15$.

3. The lithium-nickel-manganese composite oxide of claim 1, **characterized by** being represented by the general formula Li $[Ni_{0.5-0.5X}Mn_{0.5-0.5X}Li_X]O_2$ wherein X satisfies $0.05\leq X\leq 0.11$.

4. The lithium-nickel-manganese composite oxide of claims 1 to 3, **characterized in that** in X-ray powder diffractometry using a Cu-$K_\alpha$ ray, the peak intensity ratio $I_{(002)}/I_{(13-3)}$ between the (002) plane and the (13-3) plane in terms of Miller indexes hkl on the assumption of belonging to the monoclinic system is from 1.35 to 1.95.

5. The lithium-nickel-manganese composite oxide of claim 4, **characterized in that** $I_{(002)}/I_{(13-3)}$ is from 1.50 to 1.95.

6. The lithium-nickel-manganese composite oxide of claims 1 to 5, **characterized in that** the lattice constants on the assumption of belonging to C12/ml (No. 12) of the monoclinic system are as follows: a = $(5.00\pm0.5)\times n_1$ angstroms, b = $(8.67\pm0.87)\times n_2$ angstroms, c = $(5.05\pm0.51)\times n_3$ angstroms, $n_1$ to $n_3$ = integer of 1-5, $\alpha = \gamma = 90.00°$, and $\beta = 109.41\pm10.94°$.

7. The lithium-nickel-manganese composite oxide of claim 6, wherein $n_1$ to $n_3$ = 1.

8. The lithium-nickel-manganese composite oxide of claim 6, wherein $n_1$ = 3 and $n_2$ and $n_3$ = 1.

9. The lithium-nickel-manganese composite oxide of claims 1 to 8, **characterized in that** the proportion of lithium-occupied sites in the layers consisting mainly of lithium (at least either of the 2c sites and the 4h sites) in the C12/ml structure, as determined by the Rietveld analysis, is 93.5% or higher.

10. The lithium-nickel-manganese composite oxide of claims 1 to 10, **characterized in that** the crystal unit lattice has atomic fraction coordinates represented by at least one of Table 1 and Table 2 and the range of variation thereof is within $\pm10\%$ of the coordinate values.

Table 1 Atomic Fraction Coordinates

| Atom | wyck | x | y | z |
|---|---|---|---|---|
| O | 4i | 0.2600 | 0.0000 | 0.7730 |
| O | 4i | 0.5940 | 0.0000 | 0.7730 |
| O | 4i | 0.9270 | 0.0000 | 0.7730 |

Table continued

| Atom | wyck | x | y | z |
|---|---|---|---|---|
| O | 8i | 0.0850 | 0.3210 | 0.2230 |
| O | 8i | 0.4180 | 0.3210 | 0.2230 |
| O | 8i | 0.7510 | 0.3210 | 0.2230 |
| Li | 2b | 0.0000 | 0.5000 | 0.0000 |
| Li | 2c | 0.0000 | 0.0000 | 0.5000 |
| Li | 4i | 0.3330 | 0.0000 | 0.5000 |
| Li | 4h | 0.0000 | 0.3380 | 0.5000 |
| Li | 8i | 0.3330 | 0.3380 | 0.5000 |
| Mn | 4i | 0.1670 | 0.0000 | 1.0000 |
| Mn | 4g | 0.0000 | 0.8330 | 0.0000 |
| Ni | 8i | 0.3330 | 0.8330 | 0.0000 |

Table 2 Atomic Fraction Coordinates

| Atom | wyck | x | y | z |
|---|---|---|---|---|
| O | 4i | 0.7400 | 0.0000 | 0.2270 |
| O | 4i | 0.4080 | 0.0000 | 0.2270 |
| O | 4i | 0.0730 | 0.0000 | 0.2270 |
| O | 8i | 0.0850 | 0.3210 | 0.2230 |
| O | 8i | 0.4180 | 0.3210 | 0.2230 |
| O | 8i | 0.7510 | 0.3210 | 0.2230 |
| Li | 2b | 0.0000 | 0.5000 | 0.0000 |
| Li | 2c | 0.0000 | 0.0000 | 0.5000 |
| Li | 4i | 0.6670 | 0.0000 | 0.5000 |
| Li | 4h | 0.0000 | 0.6620 | 0.5000 |
| Li | 8i | 0.3330 | 0.3380 | 0.5000 |
| Mn | 4i | 0.8330 | 0.0000 | 1.0000 |
| Mn | 4g | 0.0000 | 0.1670 | 0.0000 |
| Ni | 8i | 0.3330 | 0.8330 | 0.0000 |

**11.** The lithium-nickel-manganese composite oxide of claims 1 to 10, **characterized by** having a sulfur element content of 1,500 ppm or lower.

**12.** A process for producing the lithium-nickel-manganese composite oxide of claims 1 to 12, **characterized by** mixing a nickel-manganese composite oxide of the ilmenite structure with a lithium compound and subsequently burning the mixture in an oxygenic atmosphere at a temperature of from 750°C to 1,200°C.

**13.** The process for lithium-nickel-manganese composite oxide production of claim 12, **characterized by** mixing the nickel-manganese composite oxide of the ilmenite structure with the lithium compound in such a proportion as to result in an Li/(Ni+Mn) atomic ratio of from 1.1 to 1.3 and then burning the mixture in an oxygen-containing atmosphere at a temperature of from 750°C to 1,000°C.

**14.** A process for producing the lithium-nickel-manganese composite oxide of claims 1 to 11, **characterized by** comprising a first step in which a carbonic acid salt is added to an aqueous solution containing a nickel salt and a manganese salt to precipitate a carbonate of nickel and manganese, a second step in which a lithium compound is added to and mixed with the carbonate of nickel and manganese, a third step in which the mixture is granulated by spray drying, and a fourth step in which the granulated mixture is burned in an oxygen atmosphere at a temperature of 700°C or higher.

**15.** The process for lithium-nickel-manganese oxide production of claim 14, **characterized in that** the nickel salt and the manganese salt are any one of the sulfate, hydrochloride, and nitrate or a mixture thereof, and the lithium compound is any one of lithium carbonate, lithium hydroxide, and lithium nitrate or a mixture thereof.

**16.** The process for lithium-nickel-manganese composite oxide production of claim 14, **characterized in that** the carbonic acid salt to be used in the first step is at least one of sodium hydrogen carbonate and sodium carbonate and is used in an amount of 1.0-1.5 equivalents to the total amount of the nickel and the manganese.

**17.** The process for lithium-nickel-manganese composite oxide production of claim 14, **characterized in that** the first step is conducted in an operating pH range of 7-10 and an operating temperature range of 20-100°C.

**18.** The process for lithium-nickel-manganese composite oxide production of claim 14, **characterized in that** in the second step, pulverization is conducted simultaneously with the mixing to thereby regulate the average particle diameter of the solid ingredients to 1 $\mu$m or smaller.

**19.** The process for lithium-nickel-manganese composite oxide production of claim 14, **characterized in that** the granulated mixture has an average diameter of 5-30 $\mu$m.

**20.** The process for lithium-nickel-manganese composite oxide production of claim 14, **characterized in that** after the fourth step, the burned product is washed with water to remove impurities.

**21.** The process for lithium-nickel-manganese composite oxide production of claim 14, **characterized in that** after the first step, the carbonate of nickel and manganese is taken out by filtration, washed, and then redispersed in water.

**22.** A positive active material for lithium ion secondary batteries, **characterized by** comprising the lithium-nickel-manganese composite oxide of claims 1 to 11.

**23.** A lithium ion secondary battery **characterized by** employing the positive active material of claim 22.

EP 1 652 819 A1

# FIG. 1

INTENSITY

EXAMPLE 4

EXAMPLE 5

EXAMPLE 6

EXAMPLE 7

EXAMPLE 8

COMPARATIVE EXAMPLE 4

0      20      40      60      80      100

2θ Cu-Kα/ANGLE

# FIG. 2

# FIG. 3

## FIG. 4

X-RAY POWDER DIFFRACTION PATTERN OF
Li [ Ni$_{0.46}$Li$_{0.08}$Mn$_{0.46}$ ] O$_2$

BELONGING TO HEXAGONAL SYSTEM

INTENSITY

(003)

EXPERIMENTAL VALUE

d = 4.316Å  d = 4.141Å

Li$_2$MnO$_3$

17  18  19  20  21  22  23  24

2θ Cu-Kα/ANGLE

BELONGING TO HEXAGONAL SYSTEM

INTENSITY

d (110) = 1.440Å

EXPERIMENTAL VALUE

(110)

d (113) = 1.379Å

Li$_2$MnO$_3$

(113)

60  62  64  66  68  70

2θ Cu-Kα/ANGLE

· 3 x d (110) = 4.320Å ≃ 4.316Å ⟶ SHORT-RANGE ORDER

EP 1 652 819 A1

## INTERNATIONAL SEARCH REPORT

| | International application No. |
|---|---|
| | PCT/JP2004/010238 |

A. CLASSIFICATION OF SUBJECT MATTER
Int.Cl⁷ C01G53/00, H01M4/02, H01M4/58, H01M10/40

According to International Patent Classification (IPC) or to both national classification and IPC

B. FIELDS SEARCHED

Minimum documentation searched (classification system followed by classification symbols)
Int.Cl⁷ C01G53/00, H01M4/02, H01M4/58, H01M10/40

Documentation searched other than minimum documentation to the extent that such documents are included in the fields searched
Jitsuyo Shinan Koho          1926-1996   Toroku Jitsuyo Shinan Koho   1994-2004
Kokai Jitsuyo Shinan Koho   1971-2004   Jitsuyo Shinan Toroku Koho   1996-2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X <br> A | WO 2002/078105 A1 (Matsushita Electric Industrial Co., Ltd.), 03 October, 2002 (03.10.02), Claims; page 14, line 22 to page 22, line 13; examples; tables 2, 4 <br> & EP 1296391 A    & US 2003-170540 A1 | 1-13,22,23 <br> 14-21 |
| A | JP 6-203829 A (Matsushita Electric Industrial Co., Ltd.), 22 July, 1994 (22.07.94), Claims; examples (Family: none) | 1-23 |

[X] Further documents are listed in the continuation of Box C.          [ ] See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search <br> 29 September, 2004 (29.09.04) | Date of mailing of the international search report <br> 12 October, 2004 (12.10.04) |
|---|---|
| Name and mailing address of the ISA/ <br> Japanese Patent Office | Authorized officer |
| Facsimile No. | Telephone No. |

Form PCT/ISA/210 (second sheet) (January 2004)

## INTERNATIONAL SEARCH REPORT

International application No.

PCT/JP2004/010238

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-034536 A  (Mitsubishi Chemical Corp.), 07 February, 2003 (07.02.03), Claims; examples (Family: none) | 1-23 |
| A | JP 11-130438 A  (Director General, Agency of Industrial Science and Technology), 18 May, 1999 (18.05.99), Claims; examples 8 to 10 & WO 1999/08964 A        & EP 959044 A1 | 1-23 |

Form PCT/ISA/210 (continuation of second sheet) (January 2004)